(19)

Europäisches
Patentamt
European
Patent Office
Office européen
des brevets

(11) **EP 2 800 309 A1**

(12) **EUROPEAN PATENT APPLICATION**
published in accordance with Art. 153(4) EPC

(43) Date of publication:
**05.11.2014 Bulletin 2014/45**

(51) Int Cl.:
*H04L 12/26* (2006.01)     *G06F 15/16* (2006.01)
*G06Q 50/10* (2012.01)

(21) Application number: **12861518.4**

(22) Date of filing: **26.12.2012**

(86) International application number:
**PCT/KR2012/011507**

(87) International publication number:
**WO 2013/100594 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2011   KR 20110147782**

(71) Applicant: **Intellectual Discovery Co., Ltd.
511, Samseong-ro, Gangnam-gu
Seoul
135-090 (KR)**

(72) Inventor: **JUNG, Hyun Cho
Seoul 135-092 (KR)**

(74) Representative: **Gross, Felix et al
Patentanwälte Maikowski & Ninnemann
Postfach 15 09 20
10671 Berlin (DE)**

(54) **METHOD, SERVER, AND RECORDING MEDIUM FOR PROVIDING LAG OCCURRENCE ABUSING PREVENTION SERVICE USING RELAY SERVER**

(57)    The method for providing lag occurrence abusing prevention service by using a relay server includes a first step for allowing a relay server to create a pattern of a network usage or a traffic by sensing a network condition of a client; a second step for allowing a game server to analyze the created pattern and, when it is resultantly analyzed that a lag for abusing is generated, to impose a penalty grade according to a corresponding lag generating frequency; and a third step for imposing a penalty on a user who manipulates the client when the penalty grade accesses a predetermined level.

FIG. 8A

EP 2 800 309 A1

## Description

### [Technical Field]

This application relates to a method, a server, and a recording medium for providing a lag occurrence abusing prevention service using a relay server, and more particularly, to a method, a server, and a recording medium for providing a lag occurrence abusing prevention service using a relay server, capable of preventing innocent victims from being made by recognizing whether a lag is intentionally generated as abusing and imposing a penalty on an abuser.

### [Background Art]

In general, peer to peer (P2P) indicates file sharing between users that are directly connected to each other. In this regard, all participants simultaneously serve not only as suppliers but also as demanders by directly enabling personal computers to be connected to each other to search each other beyond conventional concept such as server and client, or supplier and consumer.

The P2P is roughly classified into two methods, a first method of which is realizes a user to user access by the action of a server in some degree, and a second method realizes the user to user access by directly pre-sharing personal information such as address between clients to facilitate direct connection therebetween without using a server. In the first method, direct information sharing and switching are performed between the users after access and search are performed, identically to the second method.

In such a P2P game environment, a game lag may be generated, and this game lag may depend on various environments including PC conditions, network resource conditions, network speeds, service provider types, and resources of each client. For example, when a lag is generated in a first user who uses the P2P and the first user bounds off the P2P, a second user who uses the P2P may play a game with a computer.

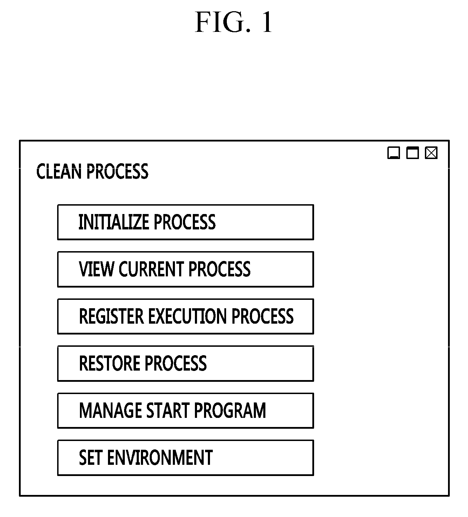

Replacement of hardware for preventing this problem is not possible until a user perform the replacement. Accordingly, as shown in FIG. 1, a program for facilitating software minimization of a lag has been developed. This program permits an initial window basic process only.

The program is created to forcibly quit grid delivery and adware, and merely serves to prevent lag occurrence during the game, without removing a grid delivery program or an adware program.

Further, a technique has been disclosed to prevent the lag occurrence at a maximum without hardware replacement by forcibly quit a current process, removing temporary files and/or cookies to increase the space of a RAM, managing a start program, initializing an explore, optimizing an active X, blocking an inflow of zombie PC network, and installing an antivirus. This lag occurrence preventing technique becomes popular among many gamers.

However, it is not possible to apply the lag occurrence preventing technique to the case of intentionally generating a lag. As for the reason that a game is quitted in the middle of playing the game, a user may want not to enjoy the game, but may quit the game to merely obtain game money. In this regard, by using a conventional server, it is difficult to recognize which user generates this lag. Accordingly, the number of the innocent victims is increased, and it is not possible to seek out malicious abusers. There is a problem in that abusing is not prevented since no technique exists to impose strong penalties on the abusers.

## [DISCLOSURE]

### [Technical Problem]

The present application has been made in an effort to provide a method, a server, and a recording medium for providing a lag occurrence abusing prevention service using a relay server, having advantages of being capable of preventing abnormal abusing by using a PvP game method through the relay server to recognize a reason for connection releasing in more detail.

The present application has also been made in an effort to provide a method, a server, and a recording medium for providing a lag occurrence abusing prevention service using a relay server, having advantages of being capable of precisely seeking out an abuser by checking which network is disconnected from the relay server or whether a corresponding user intentionally generate a lag to disconnect the connection therewith and by using double filtering with network pattern and lag generation number.

The present application has also been made in an effort to provide a method, a server, and a recording medium for providing a lag occurrence abusing prevention service using a relay server, having advantages of being capable of remarkably reducing the number of times of lags coming near losing user's interest, which are intentionally generated by recognizing which user intentionally generates a lag with the server to impose a stronger penalty on an abuser and prevent an innocent victim from being made.

### [Technical Solution]

An exemplary embodiment of the present application provides a method for providing a lag occurrence abusing prevention service using a relay server, including: a first step for allowing a relay server to create a pattern of a network usage or a traffic by sensing a network condition of a client; a second step for allowing a game server to analyze the created pattern and, when it is resultantly analyzed that a lag for abusing is generated, to impose a penalty grade according to a corresponding lag generating frequency; and a third step for imposing a penalty on a user who manipulates the client when the penalty grade accesses a predetermined level.

Another exemplary embodiment provides a method for providing a lag occurrence abusing prevention service using a relay server, including: a first step for allowing a relay server to create a pattern of a network usage or a traffic by sensing a network condition of a client; a second step for allowing the game server to determine whether the created pattern indicates that the lag for the abusing is generated to impose the penalty grade when the lag generating frequency accesses a predetermined level; and a third step for imposing a penalty on a user who manipulates the client when the penalty grade accesses a predetermined level.

The first step may include allowing the relay server to create a graph-like pattern of the network usage or the traffic by sensing the network condition of the client.

The second step may determine that the lag for the abusing is generated when the network usage or the traffic is increased at a time point at which the lag is generated, and determines that no lag for the abusing is generated when the network usage or the traffic is consistently increased around the time point at which the lag is generated.

It may be determined that the lag for the abusing is generated when the network usage or the traffic is formed as one of an impulse function, a step function, and a unit function based on the time point at which the lag is generated.

The third step may include determining that no lag for the abusing is generated and reducing a penalty level which is imposed on the user who manipulates the client when the network usage or the traffic is consistently increased around the time point at which the lag is generated.

The penalty may be imposed when the penalty grade accesses the predetermined level, and when a penalty grade that excesses the predetermined level is additionally applied thereto, the penalty may be imposed in at least one of a linear form, an exponential-function form, and a stepwise form.

The lag generating frequency may be determined by multiplying a lag generating number per game number of times by 100, and may range from 25% to 100%.

The lag generating frequency may be determined by multiplying a lag generating number per game number of times by 100 and, when the lag is generated in at least one form of a continuous form, a periodic form, and a concentrated form, the weight value may be increased in at least one of a linear form, an exponential-function form, and a stepwise form to be applied.

The lag generating frequency may be calculated by accumulating lag generating pattern and frequency for a predetermined period or a predetermined number of times.

Yet another exemplary embodiment provides a computer readable recording medium recorded with program for executing a method for providing a lag occurrence abusing prevention service using a relay server, wherein the program implements: a function for allowing a relay server to create a pattern of a network usage or a traffic by sensing a network condition of a client; a function for allowing a game server to analyze the created pattern and, when it is resultantly analyzed that a lag for abusing is generated, to impose a penalty grade according to a corresponding lag generating frequency; and a function for imposing a penalty on a user who manipulates the client when the penalty grade accesses a predetermined level.

Yet another exemplary embodiment provides a computer readable recording medium recorded with program for executing a method for providing a lag occurrence abusing prevention service using a relay server, wherein the program implements: a first step for allowing a relay server to create a pattern of a network usage or a traffic by sensing a network condition of a client; a second step for allowing the game server to determine whether the created pattern indicates that the lag for the abusing is generated to impose the penalty grade when the lag generating frequency accesses a predetermined level; and a third step for imposing a penalty on a user who manipulates the client when the penalty grade accesses a predetermined level.

Yet another exemplary embodiment provides a server for providing a lag occurrence abusing prevention service using a relay server, including: a lay server configured to create a pattern of a network usage or a traffic by sensing a network condition of a client; and a game server configured to impose a penalty on a client that generates a lag for abusing by using a pattern of the relay server and lag related data of the client, wherein the game server includes: a storage configured to store the pattern of the relay server based on at least one of a predetermined period and a predetermined number of times, and receive lag related data of the client to store it in linkage with a corresponding ID; a pattern analyzer configured to analyze the pattern stored in the storage to resultantly determine whether a lag for abusing is generated when the lag related data is stored to correspond to at least one of the predetermined period and the predetermined number of times; and a penalty applier configured to calculate a lag generating ratio based on at least one of the period and the number of times when it is determined by the pattern analyzer that the lag for the abusing is generated, and impose a penalty when the lag generating ratio is not within a normal range.

Yet another exemplary embodiment provides a server for providing a lag occurrence abusing prevention service using a relay server, including: a lay server configured to create a pattern of a network usage or a traffic by sensing a network condition of a client; and a game server configured to impose a penalty on a client that generates a lag for abusing by using a pattern of the relay server and lag related data of the client, wherein the game server includes: a storage configured to store the pattern of the relay server based on at least one of a predetermined period and a predetermined number of times, and receive lag related data of the client to store it in linkage with a corresponding ID; a pattern analyzer configured to analyze the pattern stored in the storage to resultantly determine whether a lag for abusing is generated when the lag related data is stored to correspond to at least one of the predetermined period and the predetermined number of times; and a penalty applier configured to calculate a lag generating ratio based on at least one of the period and the number of times and impose the penalty when the lag generating ratio is not within a normal range and the pattern of the pattern analyzer indicates that the lag for the abusing is generated.

The pattern analyzer may determine that the lag for the abusing is generated when the network usage or the traffic is increased at a time point at which the lag is generated, and determines that no lag for the abusing is generated when the network usage or the traffic is consistently increased around a time point at which the lag is generated.

The pattern analyzer may determine that the lag for the abusing is generated when the network usage or the traffic is formed as one of an impulse function, a step function, and a unit function based on the time point at which the lag is generated.

**[Advantageous Effects]**

As described above, in accordance with the techniques disclosed in this specification, it is possible to ① prevent abnormal abusing by using a PvP game method through the relay server to recognize a reason for connection releasing in more detail, ② precisely seek out an abuser by checking which network is disconnected from the relay server or whether a corresponding user intentionally generate a lag to disconnect the connection therewith and by using double filtering with network pattern and lag generation number, and remarkably reduce the number of times of lags coming near losing user's interest, which are intentionally generated by recognizing which user intentionally generates a lag with the server to impose a stronger penalty on an abuser and prevent an innocent victim from being made.

**[Description of the Drawings]**

FIG. 1 shows a lag occurrence preventing program in accordance with a conventional art.
FIG. 2 is a block diagram shows a server for providing a lag occurrence abusing prevention service using a relay server and clients in accordance with this specification.
FIG. 3A and FIG. 3B are block diagrams showing a server for providing a lag occurrence abusing prevention service using a relay server in accordance with this specification.
FIG. 4A and FIG. 4B are block diagrams showing a driving operation of the server for providing a lag occurrence abusing prevention service using a relay server in accordance with this specification.
FIG. 5 is graphs showing pattern classification of the server for providing a lag occurrence abusing prevention service using a relay server in accordance with this specification.
FIG. 6 is schematic views showing a lag generating frequency of the server for providing a lag occurrence abusing prevention service using a relay server in accordance with this specification.
FIG. 7 shows an example of a penalty imposing method of the server for providing a lag occurrence abusing prevention service using a relay server in accordance with this specification.
FIG. 8A and FIG. 8B are flowcharts showing a method for providing a lag occurrence abusing prevention service using a relay server in accordance with this specification.

**[Mode for Invention]**

The detailed descriptions of disclosed techniques are merely exemplary embodiments for structural and functional explanation, serve only for describing the disclosed techniques, and by no means limit or restrict the spirit and scope of the disclosed techniques. In other words, the exemplary embodiments may be modified in various ways and have many different forms, and thus the scope of the disclosed techniques shall be construed as including equivalents which can realize the spirit of the appended claims. The objects or effects suggested in the disclosed techniques are not necessarily entirely included in a specific embodiment, or exclusively the effects are not included therein, and by no means limit or restrict the spirit and scope of the disclosed techniques
The meaning of terms used in this specification should be understood as follows.
Terms such as "first" and "second" can be used in describing various elements, but the above elements shall not be restricted to the above terms. The above terms are used only to distinguish one element from the other. For instance, the first element can be named the second element, and vice versa, without departing the scope of claims.
When one element is described as being "connected" or "accessed" to another element, it shall be construed as being connected or accessed to another element directly but also as possibly having yet another element in between. On the other hand, if one element is described as being "directly connected" or "directly accessed" to another element, it shall be construed that there is no other element in between. This is also true of other expressions for explaining a relationship between elements, i.e., "between" and "directly between" or "adjacent to" and "directly adjacent to."

Unless clearly used otherwise, expressions in the singular number include a plural meaning. In the present description, an expression such as "comprising" or "consisting of" is intended to designate a characteristic, a number, a step, an operation, an element, a part or combinations thereof, and shall not be construed to preclude any presence or possibility of one or more other characteristics, numbers, steps, operations, elements, parts or combinations thereof.

Identification codes (e.g., a, b, and c) of each step are merely used for better comprehension and ease of description, not indicating a specific order of the steps, and the steps may be performed in a different order from a described order, unless clearly limited otherwise. Specifically, the steps may be performed in the same order as the described order, may substantially simultaneously be performed, or may be performed in the reverse order.

The disclosed techniques may be embodied as computer-readable codes in a computer readable recording medium, and the computer readable recording medium may include all kinds of recording devices for storing data that is readable by a computer system. Examples of the computer readable recording medium includes a ROM, a RAM, a CD-ROM, a magnetic tape, a floppy disk, an optical data storage device, and the like, and further includes a device for storing data transmitted in a form of carrier waves (e.g., transmission through the Internet). Further, a computer readable recording medium recorded with programs as described above may be distributed to a computer system connected through a network and thus store and execute a computer readable code by a distributed manner.

Unless otherwise defined, all terms used herein have the same meaning as how they are generally understood by those of ordinary skill in the art to which the invention pertains. Any term that is defined in a general dictionary shall be construed to have the same meaning in the context of the relevant art, and, unless otherwise defined explicitly, shall not be interpreted to have an idealistic or excessively formalistic meaning.

Hereinafter, exemplary embodiments of this specification will be described in detail with reference to the accompanying exemplary drawings.

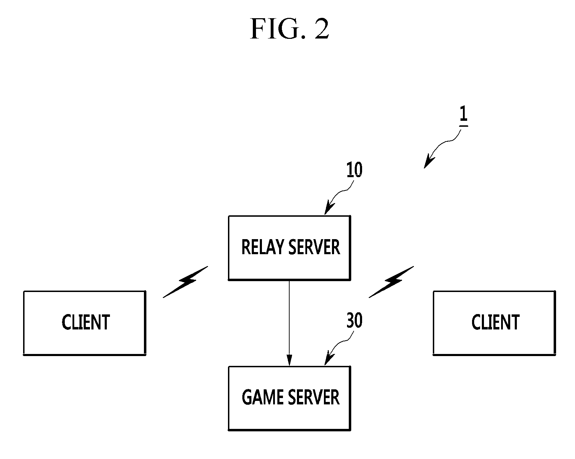

FIG. 2 is a block diagram shows a server for providing a lag occurrence abusing prevention service using a relay server and clients in accordance with this specification. Referring to FIG. 2, the server 1 for providing a lag occurrence abusing prevention service using a relay server includes a relay server 10 connected to a game client; and a game server 30 for providing a game to the game client, storing lag related data, and imposing a penalty on an abuser.

The relay server 10 serves to recognize a pattern of each client network state to examine a reason for disconnection in more detail and prevent abnormal abusing through a player versus player (PvP) game method.

A peer to peer (P2P) game method is difficult to check which network is disconnected or whether a lag is intentionally generated to release a connection. Accordingly, the relay server 10 is used to connect one client with the other client and play a game, thereby recognizing which one of the clients has a problem in the access. In this regard, the relay server 10 is configured to impose a strong penalty on an abuser and prevent an innocent victim from being made.

Specifically, the relay server 10 is used to perform real-time monitoring of network latency of each client, set a lag-related reference level to recognize whether an intentional network error is generated, and recognize which one of the clients intentionally a lag to prevent an innocent client from being damaged by a sudden disconnection made by the client who intentionally generate the lag during the game.

Hereinafter, the network latency is represented as a network condition in this specification. In this specification, the client is defined as the opposite concept to a server, e.g., a computer providing information, and a user is defined as a national person who performs a manipulation of the client, and the like.

The game server 30 is provided to impose a strong penalty on a user who intentionally generates a lag based on the network condition recognized by the relay server 10 and lag-related information including the number of times at which the lag is generated, and a lag period. The penalty may be variously set.

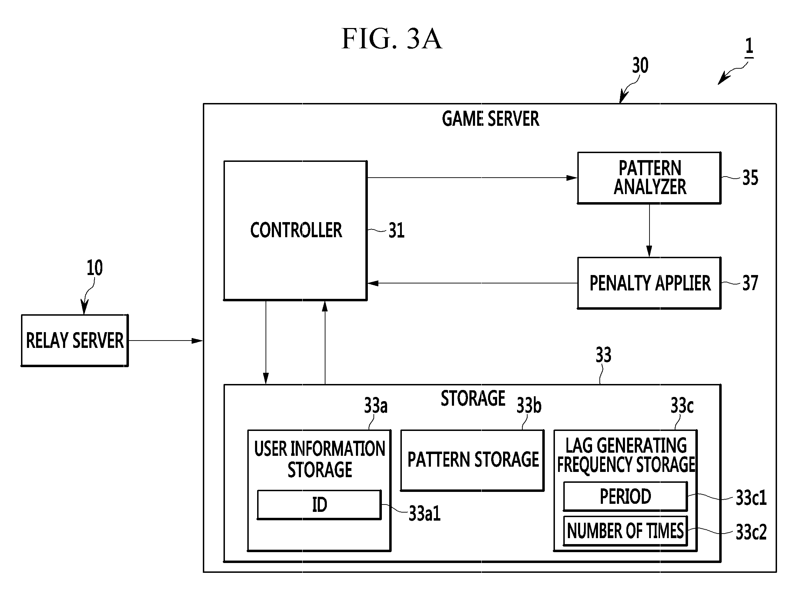

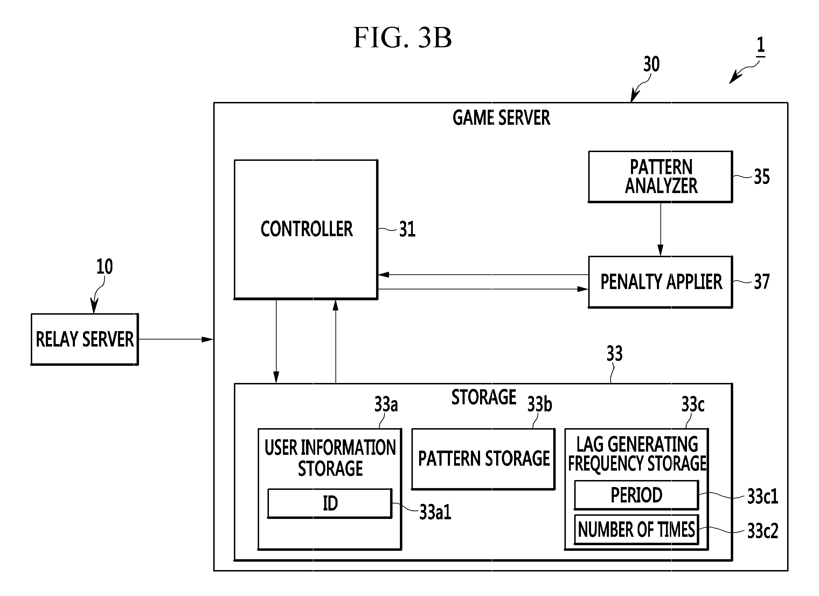

FIG. 3A and FIG. 3B are block diagrams showing a server for providing a lag occurrence abusing prevention service using a relay server in accordance with this specification. Referring to FIG. 3A, a pattern of the network condition of each client obtained from the relay server 10 is inputted into the game server 30, and the game server 30 determines whether the lag is intentionally generated to impose the penalty thereon by using the pattern and lag-related data obtained from each client.

The game server 30 includes a controller 31, a storage 33, a pattern analyzer 35, and a penalty applier 37. The controller 31 serves to control each constituent element, serves as an input and output path of each data, and serves to store updated data in the storage 33.

For example, when a phenomenon such as a sudden disconnection is generated by a lag caused through a client, a user receives such lag related data from each client and stores it, and stores a pattern that is inputted from the relay server 10.

The storage 33 includes a user information storage 33a, a pattern storage 33b, and a lag generating frequency storage 33c, and the user information storage 33a receives and stores an inherent identification such as an ID 33a1 to identify users who manipulate clients.

The pattern storage 33b stores the pattern of the network condition of each client inputted from the relay server 10, and the lag generating frequency storage 33c includes a period 33c1 for storing a lag generating frequency based on a period, and a frequency 33c2 for storing the lag generating frequency based on a frequency.

Based on the lag related data, the pattern analyzer 35 analyzes patterns received through the relay server 10 during a predetermined period or for a predetermined game number of times to determine whether abusing is generated based on the analysis result. Specifically, when usage or traffic is suddenly increased around a time point at which the lag is generated even though the network condition is good, i.e., the usage or traffic is not excessively increased, the pattern analyzer 35 determines this pattern is the abusing. However, the pattern analyzer 35 determines this pattern is not the abusing when the usage or traffic is excessively increased around the time point at which the lag is generated.

It is obvious that such determination rule is changeable to network conditions or client variety without being limited thereto.

The reason to make the determination rule is to not determine a consistently poor network condition as the abusing when the consistently poor network condition includes cases of poor network lines, low network speeds, low computer specifications, and the like. In these cases, the lag is generated by the environment, not intentionally.

In contrast, when the network condition is suddenly changed into a poor level around the time point at which the lag is generated, that is, the scope becomes infinite like an impulse function, a step function, or a unit function, the lag may be determined to be intentionally generated. Accordingly, this case is primarily determined as the abusing at a high possibility.

Further, filtering for determining whether the abusing is generated is primarily performed by analyzing the pattern of the network condition. Secondarily, the lag generating frequency is recognized. When the lag generating frequency excesses a predetermined level, the abusing is determined to be generated to impose a penalty. As a result, precise determination on whether the abusing is generated through the primary filtering and the secondary filtering instead of using the primary analysis of patterns or the secondary analysis of lag generating frequency.

It is obvious that such filtering rules are changeable without being limited thereto.

Herein, the lag generating frequency based on the period 33c1 is determined as a ratio of a lag generating time period to a reference time period, and the lag generating frequency based on the frequency 33c2 is determined as a ratio of a lag generating frequency to a reference frequency, and the lag generating frequency based on the period 33c1 may be obtained based on the frequency 33c2. In this case, the lag generating frequency may be determined as a ratio of a lag generating frequency to a game frequency.

The penalty applier 37 recognizes the lag generating frequency based on data that is filtered one time from the pattern analyzer 35, the period 33c1, and the frequency 33c2. Specifically, the penalty applier 37 imposes a penalty when the lag generating frequency ranges from 25% to 100%, and applies each weight value when the lag is continuously generated, the lag is periodically generated, or the lag is concentratedly generated during the game.

For example, it is assumed that one-week patterns are analyzed to correct pertinent lag related data, the game is performed at 30 times during one week, 10 lag generating patterns are provided, and the 10 lag generating patterns are continuously formed.

When the slope of the patterns is primarily determined to be infinite like an impulse function, a unit function, and a step function, the lag generating information for the pattern generating the lag is secondarily analyzed by the penalty applier 37. When it is assumed that the lag is generated at three times, the lag generating frequency is calculated by the following Equation 1.

$$(Equation\ 1)$$

$$F(\%) = \frac{L(3)}{G(30)} \times 100$$

where F indicates the lag generating frequency, L indicates the number of times at which the lag is generated, and G indicates the number of times at which the game is performed.

Since the lag generating frequency is 10%, the penalty is not applied. Specifically, although the lag is generated at 10 times based on the primary pattern analysis, the number of times at which the lag is actually generated to cause the disconnection is 3. As a result, the lag generating frequency is 10%, and thus the penalty is not applied to the user.

Referring to FIG. 3B, the patterns of each client network condition obtained from the relay server 10 are inputted into the game server 30, and the game server 30 recognizes whether the lag is generated by using the patterns and the lag related data obtained from each client to thereby impose a penalty.

The game server 30 includes the controller 31, the storage 33, the pattern analyzer 35, and the penalty applier 37. The controller 31 serves to control each constituent element, serves as input and output path of each data, and serves to store updated data in the storage 33.

For example, when a phenomenon such as a sudden disconnection is generated by a lag caused through a client, a user receives such lag related data from each client and stores it, and stores a pattern that is inputted from the relay server 10.

The storage 33 includes the user information storage 33a, the pattern storage 33b, and the lag generating frequency storage 33c, and the user information storage 33a receives and stores an inherent identification such as the ID 33a1 to identify users who manipulate clients.

The pattern storage 33b stores the pattern of the network condition of each client inputted from the relay server 10, and the lag generating frequency storage 33c includes the period 33c1 for storing a lag generating frequency based on a period, and the frequency 33c2 for storing the lag generating frequency based on a frequency.

Based on the lag related data, the pattern analyzer 35 analyzes patterns received through the relay server 10 during a predetermined period or for a predetermined game number of times to determine whether abusing is generated based on the analysis result. Specifically, when usage or traffic is suddenly increased around a time point at which the lag is generated even though the network condition is good, i.e., the usage or traffic is not excessively increased, the pattern analyzer 35 determines this pattern is the abusing. However, the pattern analyzer 35 determines this pattern is not the abusing when the usage or traffic is excessively increased around the time point at which the lag is generated.

It is obvious that such determination rule is changeable to network conditions or client variety without being limited thereto.

The reason to make the determination rule is to not determine a consistently poor network condition as the abusing when the consistently poor network condition includes cases of poor network lines, low network speeds, low computer specifications, and the like. In these cases, the lag is generated by the environment, not intentionally.

In contrast, when the network condition is suddenly changed into a poor level around the time point at which the lag is generated, that is, the scope becomes infinite like an impulse function, a step function, or a unit function, the lag may be determined to be intentionally generated. Accordingly, this case is primarily determined as the abusing at a high possibility.

Further, filtering for determining whether the abusing is generated is primarily performed by analyzing the pattern of the network condition. Secondarily, the patterns of the network conditions are analyzed to determine whether the abusing is generated to impose a penalty. As a result, precise determination on whether the abusing is generated through the primary filtering and the secondary filtering instead of using the primary analysis of patterns or the secondary analysis of lag generating frequency.

It is obvious that such filtering rules are changeable without being limited thereto.

Herein, the lag generating frequency based on the period 33c1 is determined as a ratio of a lag generating time period to a reference time period, and the lag generating frequency based on the frequency 33c2 is determined as a ratio of a lag generating frequency to a reference frequency, and the lag generating frequency based on the period 33c1 may be obtained based on the frequency 33c2. In this case, the lag generating frequency may be determined as a ratio of a lag generating frequency to a game frequency.

The penalty applier 37 recognizes the lag generating frequency based on data that is filtered one time from the pattern analyzer 35, the period 33c1, and the frequency 33c2. Specifically, the penalty applier 37 imposes a penalty when the lag generating frequency ranges from 25% to 100%, and applies each weight value when the lag is continuously generated, the lag is periodically generated, or the lag is concentratedly generated during the game.

For example, it is assumed that one-week patterns are analyzed to correct pertinent lag related data, the game is performed at 30 times during one week, 10 lag generating patterns are provided, and the 10 lag generating patterns are continuously formed.

When lag generating information is primarily filtered by the penalty applier 37 and the slope of the patterns is secondarily determined to be infinite like an impulse function, a unit function, and a step function, the patterns are analyzed by the pattern analyzer 35. When it is assumed that the lag is generated at three times, the lag generating frequency is calculated by the following Equation 2.

$$(\text{Equation 2})$$

$$F\,(\%) = \frac{P\,(3)}{G\,(30)} \times 100$$

where F indicates the lag generating frequency, P indicates the number of times at which the pattern is formed, and G indicates the number of times at which the game is performed.

Since the lag generating frequency is 10%, the penalty is not applied. Specifically, although the lag is generated at 10 times based on the primary frequency analysis, the number of patterns at which the lag is generated to cause the disconnection is 3. As a result, the lag generating frequency is 10%, and thus the penalty is not applied to the user.

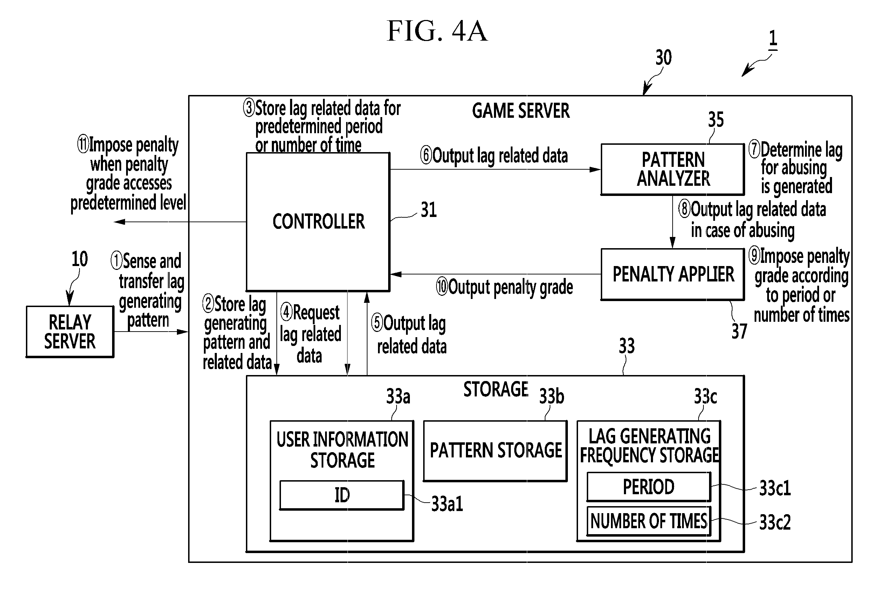

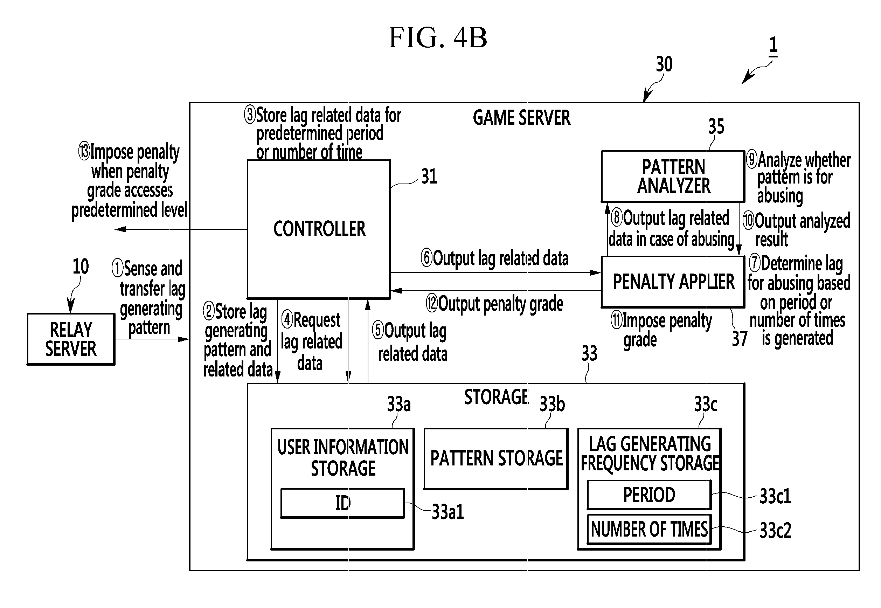

FIG. 4A and FIG. 4B are block diagrams showing a driving operation of the server for providing a lag occurrence abusing prevention service using a relay server in accordance with this specification. Referring to FIG. 4A, ① the driving operation of the server 1 is started as the relay server 10 senses and transfers a lag generating pattern.

② The controller 31 stores the lag generating patterns and pertinent data in the storage 33, in linkage with the ID 33a1, and ③ specifically stores them in the pattern storage 33b during a predetermined period or for a predetermined game number of times.

④ The controller 31 makes a request for analyzing the patterns and lag related data accumulated during a predetermined period or for a predetermined game number of times, ⑤ the storage 33 outputs the lag related data, and ⑥ controller 31 outputs it to the pattern analyzer 35.

⑦ The pattern analyzer 35 primarily filters whether the lag for the abusing is generated since the case of one of the step function and the impulse function, i.e., the slope is infinite may correspond to the case of suddenly generating the lag, and ⑧ outputs the lag related data in the case of the patterns by performing the primary filtering.

⑨ When a penalty grade is applied according to a period or a number of times, the penalty grade is applied according to a time of the period or a lag generating number of times of the number of times. ⑩ The penalty grade is outputted to the controller 31. When the penalty grade excesses a predetermined level, ⑪ a penalty is applied to the abuser.

For example, the penalty may include reducing a user level by one step and reducing a stat, i.e., an ability value of each player by one step. In the meantime, the penalty grade may be reduced. For example, when the intentional lag generating rate for the abusing is reduced, the penalty grade may be reduced again.

A method for recognizing whether the abusing is generated by using the primary filtering with the lag generating frequency and the secondary pattern analysis will be described with reference to FIG. 4B. Referring to FIG. 4B, the method is started as the relay server 10 senses and transfers a lag generating pattern.

② The controller 31 stores the lag generating patterns and pertinent data in the storage 33, in linkage with the ID 33a1, and ③ specifically stores them in the pattern storage 33b during a predetermined period or for a predetermined game number of times.

④ The controller 31 makes a request for analyzing the patterns and lag related data accumulated during a predetermined period or for a predetermined game number of times, ⑤ the storage 33 outputs the lag related data, and ⑥ controller 31 outputs it to the pattern analyzer 35.

⑦ The penalty applier 37 determines whether the lag for the abusing based on the period or the number of times is generated. For example, when the lag generating frequency excesses 25%, the penalty applier 37 determines that the lag for the abusing is generated. Then, the penalty applier 37 performs the primary filtering in this way to ⑧ output the lag related data in the case of the lag generating frequency.

⑨ The pattern analyzer 35 analyzes the pattern as the pattern for the abusing when the slope becomes infinite, and ⑩ outputs the analysis result to the penalty applier 37. ⑪ The penalty applier 37 puts the penalty grade.

⑫ The penalty grade is outputted to the controller 31. When the penalty grade accesses a predetermined level, ⑬ a penalty is imposed on a user.

For example, the penalty may include reducing a user level by one step and reducing a stat, i.e., an ability value of each player by one step. In the meantime, the penalty grade may be reduced. For example, when the intentional lag generating rate for the abusing is reduced, the penalty grade may be reduced again.

The relay server 10 of this application may sense the network condition of the client to form a graph-like pattern, and recognize whether the formed pattern indicates that the lag for the abusing is generated by determining that the lag for the abusing is generated when a network usage is increased at a time point at which the lag is generated and by determining that no lag for the abusing is generated when the network usage is consistently increased around the time point at which the lag is generated.

When the network usage is formed as one of the impulse function, the step function, and the unit function, it is determined that the lag for the abusing is generated based on the time point at which the lag is generated. In contrast, when the network usage is consistently increased around at the time point at which the lag is generated, it is determined that no lag for the abusing is generated. Then, the penalty level which is imposed on the user who manipulates the client may be reduced.

When the penalty grade accesses a predetermined level, the penalty is imposed. In this regard, when a penalty grade that excesses the predetermined level is additionally applied thereto, the penalty may be imposed in at least one of a linear form, an exponential-function form, and a stepwise form.

The lag generating frequency is determined by multiplying a lag generating number per game number of times by 100, and preferably the predetermined level ranges from 25% to 100%. When the lag is generated in at least one form of a continuous form, a periodic form, and a concentrated form, the weight value may be increased in at least one of a linear form, an exponential-function form, and a stepwise form to be applied.

The lag generating frequency may be calculated by accumulating a lag generating pattern and frequency for a predetermined period or a predetermined number of times.

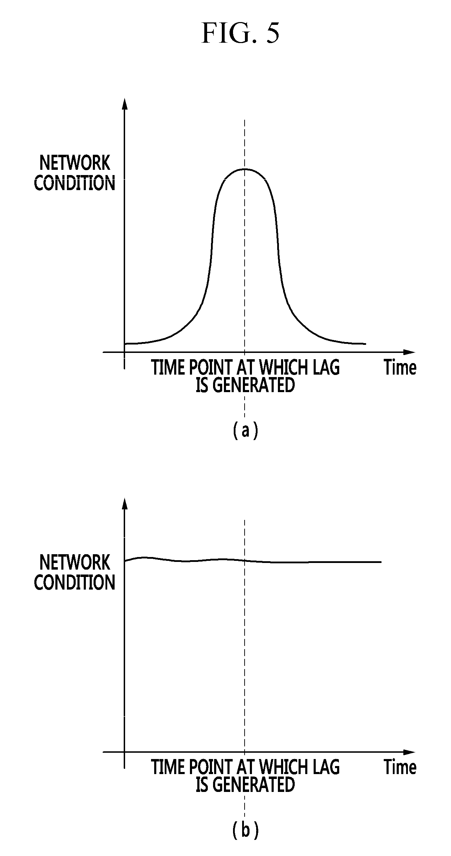

FIG. 5 is graphs showing pattern classification of the server for providing a lag occurrence abusing prevention service using a relay server in accordance with this specification. FIG. 5(a) shows an impulse-function pattern. In this case, it may be determined that an original condition, i.e., a game network condition is good, but the lag is intentionally generated. In the case of FIG. 5(b), the original condition is determined as a poor environment of which an original network resource is poor, which may cause a continuous lag.

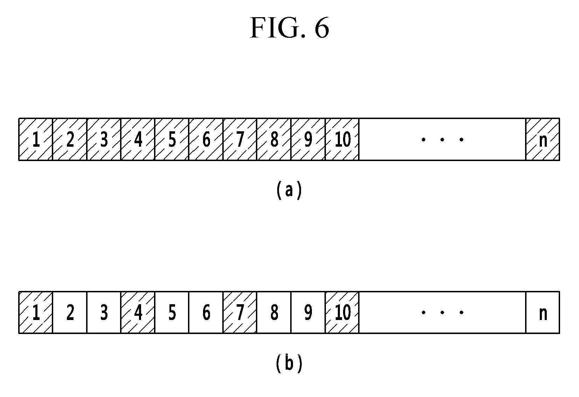

FIG. 6 is schematic views showing a lag generating frequency of the server for providing a lag occurrence abusing prevention service using a relay server in accordance with this specification. Referring to FIG. 6, when a continuous lag is generated in the n game number of times, a higher weight value is applied to more quickly reach a predetermined penalty grade level, thereby imposing the penalty more quickly. In the case that a periodic lag is form, a weight value that is smaller than that of the continuous case is applied.

For example, the weight value of "2" may be applied in the case that lag is continuously generated at n times. The weight value of "1.3" may be applied in the case that lag is approximately generated at a ratio of one time to three games. The weight value may be changed according to the period and the number of times at which the game is continuously performed.

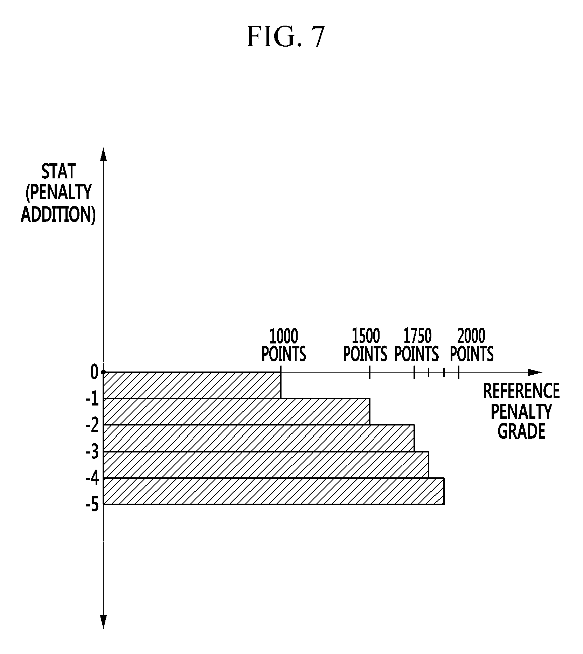

FIG. 7 shows an example of a penalty imposing method of the server for providing a lag occurrence abusing prevention service using a relay server in accordance with this specification. Referring to FIG. 7, the penalty grade is required to be 1000 points or more to impose the penalty. As shown in the following table 1, when the stat is assumed to be increased by -1 in the case of 1000 points, the stat is also assumed to be increased by -1 In the case of 1500 points, and the stat is also assumed to be increased by -1 in the case of 1750 points.

In this case, as the number of times at which the penalty grade is continuously accumulated is increased, a period during which the penalty is imposed is shortened, and it shall be obvious that this period is used as a weight value, and the penalty imposing method may be set variously.

(Table 1)

| Penalty grade | Stat decrease |
|---------------|---------------|
| 1000 points | -1 |
| 1500 points | -1 |
| 1750 points | -1 |
| 1850 points | -1 |
| 1900 points | -1 |
| . . | . . |
| . . | . . |

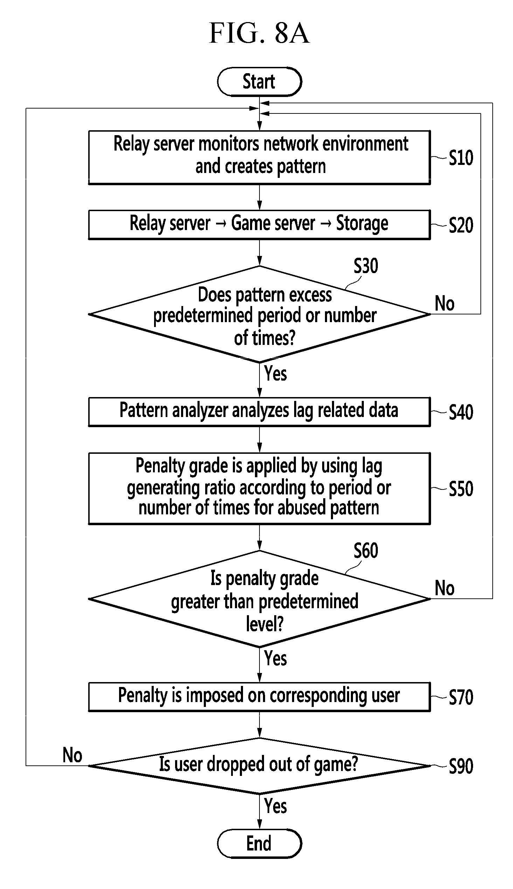

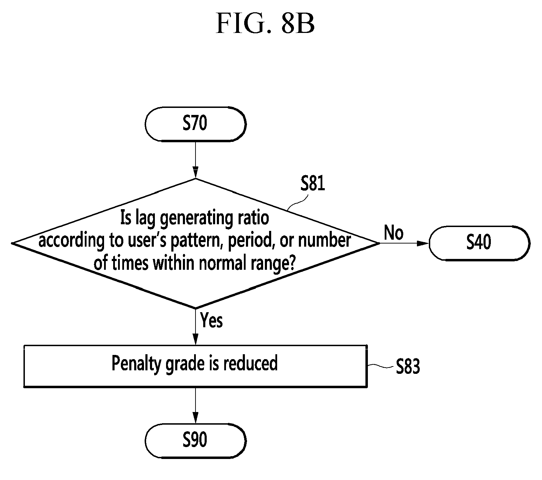

FIG. 8A and FIG. 8B are flowcharts showing a method for providing a lag occurrence abusing prevention service using a relay server in accordance with this specification. Referring to FIG. 8A, the method for providing a lag occurrence abusing prevention service is started as the relay server monitors a network environment and creates a pattern of a network usage according to a time as a graph (S10).

The pattern transferred from the relay server is stored in a storage through a game server (S20). When the pattern excesses a predetermined period or a predetermined number of times (S30), a pattern analyzer analyzes lag related data as a primary filtering (S40).

A penalty grade is applied by using a lag generating ratio according to a period or a number of times for the abused pattern, i.e., a lag generating period of a predetermined period or a lag generating number of a predetermined number of times (S50). When the penalty grade excesses a predetermined level, (S60), a penalty is imposed on a corresponding user (S70). The process returns to the step S10 for creating the pattern and performs loop circulation until the game is dropped out of the game (S 90).

Referring to FIG. 8B, the penalty may not be continuously increased. For example, the penalty may be lightened by reducing the penalty grade when the lag generating ratio according to the pattern, period, or the number of times for the corresponding user is within a normal range, e.g., in the case of normal use of a normal range when the penalty is imposed at 3 times but no penalty is imposed at one time (S83).

In the case of the abnormal range, in a step S81, the process returns the step S40 in which the pattern analyzer analyzes a lag related data to determine whether the pattern causes a lag and performs filtering.

The method for providing a lag occurrence abusing prevention service using a relay server in accordance with the exemplary embodiment of the present invention as described above may be executed by the applications basically installed in the terminal (including programs included in a platform, an operating system, or the like which are basically installed in the terminal), and may also be executed by the applications (i.e., programs) which are directly installed in the terminal by the user via an application store server or an application store server such as a web server associated with the applications or the corresponding services.

In this respect, the method for providing a lag occurrence abusing prevention service using a relay server in accordance with the exemplary embodiment may be implemented by the applications (i.e., programs) which are basically installed or directly installed by the user in the terminal and may be recorded in a computer readable recording medium of the terminal, and the like

The program implementing the method for providing a lag occurrence abusing prevention service using a relay server in accordance with the exemplary embodiment executes a function for allowing a relay server to create a pattern of a network usage or a traffic by sensing a network condition of a client; a function for allowing a game server to analyze the created pattern and, when it is resultantly analyzed that a lag for abusing is generated, to impose a penalty grade according to a corresponding lag generating frequency; and a function for imposing a penalty on a user who manipulates the client when the penalty grade accesses a predetermined level.

The programs are recorded in the computer readable recording medium and are executed by the computer, such that the above-mentioned functions may be executed.

As described above, in order for the computer to read the programs recorded in the recording medium and execute the method for providing a lag occurrence abusing prevention service in accordance with the exemplary embodiment, the above-mentioned programs may include codes which are coded with computer languages such as C, C++, JAVA, machine language, and the like which may be read by a processor (CPU) of the computer

The code may include a function code associated with a function of defining the above-mentioned functions and may also include an execution procedure related control code required for the processor of the computer to execute the above-mentioned functions according to a predetermined procedure.

Further, the code may further include a memory reference related code indicating at which location (address number) of the memory inside or outside the computer additional information or media required to allow the processor of the computer to execute the above-mentioned functions are referenced.

Further, in order for the processor of the computer to execute the above-mentioned functions, when the processor needs to communicate with any other computers or servers, etc. at a remote location, the code may further include a communication related code about how the processor of the computer communicates with any other computers or servers at a remote location or which information or media the processor of the computer transmits and receives at the time of the communication, by using the communication module (for example, wired and/or wireless communication module) of the computer.

Further, a functional program for implementing the present invention, a code and a code segment associated therewith, and the like may be easily inferred or changed by programmers in the art to which the present invention pertains in consideration of a system environment of the computer which reads the recording medium and executes the program.

Hereinabove, examples of a computer readable recording medium recorded with programs as described above include a ROM, a RAM, a CD-ROM, a magnetic tape, a floppy disk, an optical media storage device, and the like.

Further, a computer readable recording medium recorded with programs as described above may be distributed to a computer system connected through a network and thus store and execute a computer readable code by a distributed manner. In this case, at least one computer among a plurality of distributed computers may execute a part of the above-mentioned functions and transmit the executed results to at least one of the other distributed computers, and the computer receiving the result may also execute a part of the above-mentioned functions and provide the executed results to the other distributed computers.

In particular, a computer readable recording medium recorded with applications, which are programs for executing the method for providing a lag occurrence abusing prevention service in accordance with the exemplary embodiment of the present invention, may be a storage medium (for example, hard disk, and the like) included in an application store server or an application providing server such as a web server associated with applications or corresponding services, and the like, or the application providing server itself

A computer, which may read a recording medium recorded with applications that are programs for executing the method for providing a lag occurrence abusing prevention service in accordance with the exemplary embodiment, may include not only a general PC such as a typical desktop and a laptop but also a mobile terminal such as a smart phone, a tablet PC, personal digital assistants (PDAs), and a mobile communication terminal, and is to be construed as all the computable devices.

When a computer, which may read a recording medium recorded with applications that are programs for executing the method for providing a lag occurrence abusing prevention service in accordance with the exemplary embodiment, is a mobile terminal such as a smart phone, a tablet PC, a personal digital assistant (PDA), and a mobile communication terminal, the applications are downloaded from an application providing server to a general PC and thus may also be installed in the mobile terminal through a synchronization program.

Exemplary embodiments in accordance with the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of non-transitory computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

In accordance with the techniques disclosed in this specification, it is possible to ① prevent abnormal abusing by using a PvP game method through the relay server to recognize a reason for connection releasing in more detail, ② precisely seek out an abuser by checking which network is disconnected from the relay server or whether a corresponding user intentionally generate a lag to disconnect the connection therewith and by using double filtering with network pattern and lag generation number, and remarkably reduce the number of times of lags coming near losing user's interest, which are intentionally generated by recognizing which user intentionally generates a lag with the server to impose a stronger penalty on an abuser and prevent an innocent victim from being made.

While this application has been described in connection with what is presently considered to be practical exemplary embodiments, it is to be understood that the application is not limited to the disclosed embodiments, but, on the contrary, is intended to cover various modifications and equivalent arrangements included within the spirit and scope of the appended claims.

**Claims**

1. A method for providing a lag occurrence abusing prevention service using a relay server, the method comprising:

a first step for allowing a relay server to create a pattern of a network usage or a traffic by sensing a network condition of a client;
a second step for allowing a game server to analyze the created pattern and, when it is resultantly analyzed that a lag for abusing is generated, to impose a penalty grade according to a corresponding lag generating frequency; and
a third step for imposing a penalty on a user who manipulates the client when the penalty grade accesses a predetermined level.

2. The method of claim 1, the second step includes allowing the game server to determine whether the created pattern indicates that the lag for the abusing is generated to impose the penalty grade when the lag generating frequency accesses a predetermined level.

3. The method of claim 1, wherein the first step includes allowing the relay server to create a graph-like pattern of the network usage or the traffic by sensing the network condition of the client.

4. The method of claim 3, wherein the second step determines that the lag for the abusing is generated when the network usage or the traffic is increased at a time point at which the lag is generated, and determines that no lag for the abusing is generated when the network usage or the traffic is consistently increased around the time point at which the lag is generated.

5. The method of claim 4, wherein it is determined that the lag for the abusing is generated when the network usage or the traffic is formed as one of an impulse function, a step function, and a unit function based on the time point at which the lag is generated.

6. The method of claim 1, wherein the third step includes determining that no lag for the abusing is generated and reducing a penalty level which is imposed on the user who manipulates the client when the network usage or the traffic is consistently increased around the time point at which the lag is generated.

7. The method of claim 1, wherein the penalty is imposed when the penalty grade accesses the predetermined level, and when a penalty grade that excesses the predetermined level is additionally applied thereto, the penalty is imposed in at least one of a linear form, an exponential-function form, and a stepwise form.

8. The method of claim 2, wherein the lag generating frequency is determined by multiplying a lag generating number per game number of times by 100, and the predetermined level ranges from 25% to 100%.

9. The method of claim 1, wherein the lag generating frequency is determined by multiplying a lag generating number per game number of times by 100 and, when the lag is generated in at least one form of a continuous form, a periodic form, and a concentrated form, the weight value is increased in at least one of a linear form, an exponential-function form, and a stepwise form to be applied.

10. The method of claim 1, wherein the lag generating frequency is calculated by accumulating lag generating pattern and frequency for a predetermined period or a predetermined number of times.

11. A computer readable recording medium recorded with program for executing a method for providing a lag occurrence abusing prevention service using a relay server,
wherein the program implements:

a function for allowing a relay server to create a pattern of a network usage or a traffic by sensing a network condition of a client;
a function for allowing a game server to analyze the created pattern and, when it is resultantly analyzed that a lag for abusing is generated, to impose a penalty grade according to a corresponding lag generating frequency; and
a function for imposing a penalty on a user who manipulates the client when the penalty grade accesses a predetermined level.

12. A server for providing a lag occurrence abusing prevention service using a relay server, the server comprising:

a lay server configured to create a pattern of a network usage or a traffic by sensing a network condition of a client; and

a game server configured to impose a penalty on a client that generates a lag for abusing by using a pattern of the relay server and lag related data of the client,

wherein the game server includes:

a storage configured to store the pattern of the relay server based on at least one of a predetermined period and a predetermined number of times, and receive lag related data of the client to store it in linkage with a corresponding ID;

a pattern analyzer configured to analyze the pattern stored in the storage to resultantly determine whether a lag for abusing is generated when the lag related data is stored to correspond to at least one of the predetermined period and the predetermined number of times; and

a penalty applier configured to calculate a lag generating ratio based on at least one of the period and the number of times when it is determined by the pattern analyzer that the lag for the abusing is generated, and impose a penalty when the lag generating ratio is not within a normal range.

13. The server of claim 12, wherein the penalty applier calculates a lag generating ratio based on at least one of the period and the number of times and impose the penalty when the lag generating ratio is not within a normal range and the pattern of the pattern analyzer indicates that the lag for the abusing is generated.

14. The server of claim 12, wherein the pattern analyzer determines that the lag for the abusing is generated when the network usage or the traffic is increased at a time point at which the lag is generated, and determines that no lag for the abusing is generated when the network usage or the traffic is consistently increased around a time point at which the lag is generated.

15. The server of claim 14, wherein the pattern analyzer determines that the lag for the abusing is generated when the network usage or the traffic is formed as one of an impulse function, a step function, and a unit function based on the time point at which the lag is generated.

# FIG. 1

CLEAN PROCESS

| INITIALIZE PROCESS |
| VIEW CURRENT PROCESS |
| REGISTER EXECUTION PROCESS |
| RESTORE PROCESS |
| MANAGE START PROGRAM |
| SET ENVIRONMENT |

FIG. 2

FIG. 3A

1

30

35 PATTERN ANALYZER

37 PENALTY APPLIER

31 CONTROLLER

GAME SERVER

33 STORAGE

33a USER INFORMATION STORAGE
33a1 ID

33b PATTERN STORAGE

33c LAG GENERATING FREQUENCY STORAGE
33c1 PERIOD
33c2 NUMBER OF TIMES

10 RELAY SERVER

# FIG. 3B

GAME SERVER **30**

**1**

PATTERN ANALYZER ~ **35**

CONTROLLER ~ **31**

PENALTY APPLIER ~ **37**

**10**

RELAY SERVER

STORAGE **33**

USER INFORMATION STORAGE **33a**

PATTERN STORAGE **33b**

LAG GENERATING FREQUENCY STORAGE **33c**

ID ~ **33a1**

PERIOD ~ **33c1**

NUMBER OF TIMES ~ **33c2**

EP 2 800 309 A1

# FIG. 4A

# FIG. 4B

EP 2 800 309 A1

# FIG. 5

(a)

(b)

## FIG. 6

(a)

(b)

# FIG. 7

# FIG. 8A

Start

Relay server monitors network environment and creates pattern — S10

Relay server → Game server → Storage — S20

S30

Does pattern excess predetermined period or number of times? — No

Yes

Pattern analyzer analyzes lag related data — S40

Penalty grade is applied by using lag generating ratio according to period or number of times for abused pattern — S50

S60

Is penalty grade greater than predetermined level? — No

Yes

Penalty is imposed on corresponding user — S70

No — Is user dropped out of game? — S90

Yes

End

# FIG. 8B

```
        ┌──────────┐
        │   S70    │
        └──────────┘
             │
             ▼
                                        S81
        ◇ Is lag generating ratio ◇
   according to user's pattern, period, or number      No      ┌──────────┐
        of times within normal range?          ─────────────▶  │   S40    │
             │                                                  └──────────┘
            Yes
             │
             ▼
   ┌─────────────────────────────────┐
   │     Penalty grade is reduced    │────── S83
   └─────────────────────────────────┘
             │
             ▼
        ┌──────────┐
        │   S90    │
        └──────────┘
```

## INTERNATIONAL SEARCH REPORT

| | International application No. |
|---|---|
| | **PCT/KR2012/011507** |

**A. CLASSIFICATION OF SUBJECT MATTER**

***H04L 12/26(2006.01)i, G06F 15/16(2006.01)i, G06Q 50/10(2012.01)i***

According to International Patent Classification (IPC) or to both national classification and IPC

**B. FIELDS SEARCHED**

Minimum documentation searched (classification system followed by classification symbols)
H04L 12/26; G06Q 50/10; G06Q 30/02; A63F 13/12; G06Q 30/06; A63F 13/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: relay, abusing, server

**C. DOCUMENTS CONSIDERED TO BE RELEVANT**

| Category* | Citation of document, with indication, where appropriate, of the relevant passages | Relevant to claim No. |
|---|---|---|
| Y | KR 10-2011-0058497 A (DREAMINGTEC) 01 June 2011<br>Abstract, description [0019]-[0039], claims 1, 4, 7, figures 1, 2. | 1-3,7-13 |
| Y | KR 10-1020912 B1 (KONAMI DIGITAL ENTERTAINMENT CO., LTD.) 09 March 2011<br>Description [0004], [0008], [0009], [0136]-[0148]. | 1-3,7-13 |
| A | KR 10-2001-0035486 A (JUNG, EUI SUK) 07 May 2001<br>The entire description. | 1-15 |
| A | KR 10-2008-0048185 A (NHN CORPORATION) 02 June 2008<br>Abstract, claims 1, 2, 3, 12-14, figures 1-4. | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 APRIL 2013 (12.04.2013) | **15 APRIL 2013 (15.04.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/011507**

| Patent document cited in search report | Publication date | Patent family member | Publication date |
|---|---|---|---|
| KR 10-2011-0058497 A | 01.06.2011 | NONE | |
| KR 10-1020912 B1 | 09.03.2011 | CN 101384316 A | 11.03.2009 |
| | | EP 1987865 A1 | 05.11.2008 |
| | | JP 04-048215 B2 | 20.02.2008 |
| | | JP 2007-215715 A | 30.08.2007 |
| | | TW I322700 A | 01.04.2010 |
| | | TW 200806368 A | 01.02.2008 |
| | | US 2010-0227678 A1 | 09.09.2010 |
| | | US 8287350 B2 | 16.10.2012 |
| | | WO 2007-094215 A1 | 23.08.2007 |
| KR 10-2001-0035486 A | 07.05.2001 | NONE | |
| KR 10-2008-0048185 A | 02.06.2008 | JP 05-112019 B2 | 19.10.2012 |
| | | JP 2008-135030 A | 12.06.2008 |
| | | US 2008-0126159 A1 | 29.05.2008 |

Form PCT/ISA/210 (patent family annex) (July 2009)